# EUROPÄISCHE PATENTSCHRIFT

(11) **EP 0 686 061 B1**
(45) Veröffentlichungstag und Bekanntmachung des Hinweises auf die Patenterteilung: **11.09.1996**
(21) Anmeldenummer: 94907514.7
(22) Anmeldetag: 08.02.1994
(51) Int. Cl.: B01F 7/16

(54) **MISCHVORRICHTUNG FÜR FESTSTOFFE IN EINEM REAKTOR**
DEVICE FOR MIXING SOLID MATERIALS IN A REACTOR
DISPOSITIF MELANGEUR DE MATIERES SOLIDES DANS UN REACTEUR

(30) Priorität: 26.02.1993 DE 9302812 U
(43) Veröffentlichungstag der Anmeldung: 13.12.1995
(73) Patentinhaber: HYDRO-GEOLOGIE GmbH, D-99734 Nordhausen (DE)
(72) Erfinder: KNACKSTEDT, Hans-Günther, D-63505 Langenselbold (DE)
(74) Vertreter: Kosel, Peter, Dipl.-Ing.
(86) Internationale Anmeldenummer: EP9400352
(87) Internationale Veröffentlichungsnummer: WO9419096

(56) Entgegenhaltungen:
- DE-A- 2 440 079
- DE-A- 4 114 009
- DE-B- 1 021 334
- FR-A- 1 236 642
- FR-A- 1 394 217
- FR-A- 2 231 821
- FR-E- 55 719
- GB-A- 1 249 521
- US-A- 4 023 780
- US-A- 4 043 909
- US-A- 4 836 686

## Beschreibung

Die Erfindung betrifft eine Vorrichtung gemäß dem Oberbegriff des Anspruchs 1.

Die biologische Reinigung von Feststoffen, z.B. von mit Schadstoff belastetem Boden, erfolgt in der Regel in Beeten oder in flachen Reaktoren. Zur Beschleunigung und Verbesserung des Reinigungsverlaufs ist es sinnvoll, die Feststoffe in Zeitabständen zu durchmischen. Bei Beeten geschieht dies über fahrbare Umwälzaggregate, wie sie aus der Kompostiertechnik bekannt sind.

Die Ausweichbewegung des Mischwerkzeugs eines Mischers wird im Stand der Technik auf unterschiedliche Weise realisiert.

Zum einen kann nur das Mischwerkzeug die Ausweichbewegung ausführen. Dies wird über eine spezielle Kupplung zwischen der Antriebswelle des Antriebs und der Welle des Mischwerkzeugs erreicht: GB 1 323 538 A (Fig. 2), GB 741 824A(Fig. 4), GB 511 779 A (Fig. 1 bis 4), US 4 023 780 A (Fig. 1, 5 und 6), FR 1 394 217 A (Fig. 2), FR 55 719 E (Fig. 3 und 4) und GB 1 249 521 A.

Zum anderen kann der ganze Mischer die Ausweichbewegung ausführen, wobei der Drehpunkt zwischen dem Antrieb und dem Mischwerkzeug des Mischers liegt: DE 4 114 009 A, FR 1 236 642 A (Fig. 1 bis 3) und DE 1 021 334 B (Fig. 2).

Es kann auch der ganze Mischer die Ausgleichsbewegung ausführen, wobei der Drehpunkt oberhalb des Mischers, also oberhalb seines Antriebs, liegt. Dies wird nachfolgend anhand der FR 2 231 821 A und der US 4 836 686 A näher erläutert.

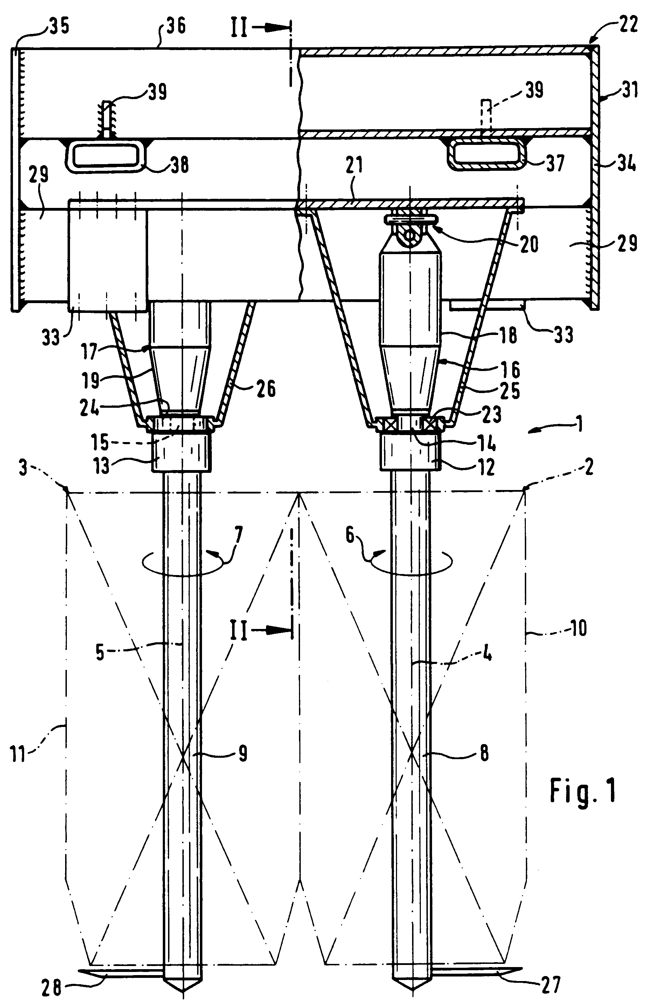

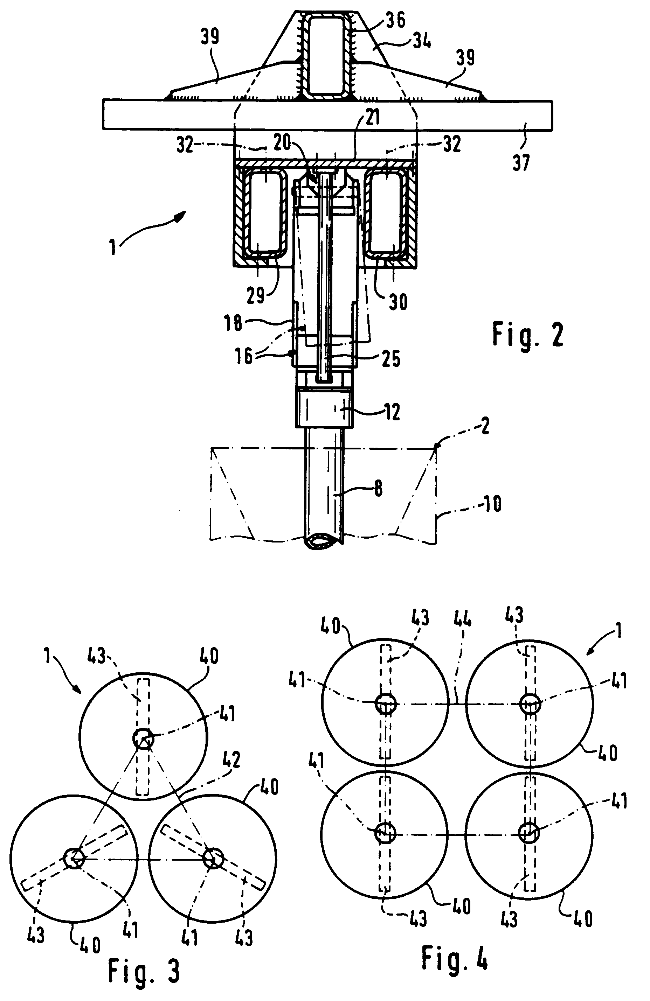

Bei bekannten Vorrichtungen der eingangs genannten Art (FR 2 231 821 A) ist einerseits (Fig. 1) der Antrieb von einem Käfig umgeben, dessen oberes Ende an dem Universalgelenk angelenkt ist. Der Mischer kann allseitig ausweichen, bis der Käfig durch einen Stabilisatorring gestoppt wird, der den Käfig etwa auf halber Höhe des Antriebs im Abstand umgibt. Andererseits (Fig. 2) soll ein Stabilisator mit Kautschukdämpfern an oberen Fortsätzen des Antriebs angreifen. Diese bekannten Vorrichtungen sind nicht transportabel.

Aus der US 4 836 686 A ist es an sich bekannt, jeden Mischer an einer längs verfahrbaren, waagerechten Welle heb- und senkbar und quer verfahrbar zu lagern. Das Heben oder Senken erfolgt selbsttätig in Abhängigkeit von den Widerständen, die das Mischgut bei der Fahrt des Mischers in Längsrichtung bietet. Quecksilberschalter schalten den Längsfahrantrieb ab, sobald der Mischer um einen Grenzwinkel angehoben wurde.

Aus der GB 1 323 538 A ist es an sich bekannt, bei einer Speiseeismaschine einen Mischbehälter durch eine hängende Welle drehend anzutreiben. In den Mischbehälter ragt von oben exzentrisch ein Schraubenflügel, der mit einer hängenden Welle fest verschraubt und drehend antreibbar ist. Im Verschraubungsbereich ist die Einheit durch ein Kugellager an einer stationären Basisplatte über elastische Ringe abgestützt. So kann die Einheit in Grenzen quer ausweichen, wenn z.B. der Mischbehälter Unrundheiten aufweist. Unklar ist, wie das Antriebsende der Welle solche Ausweichbewegungen ermöglicht.

Aus der GB 1 223 112 A ist es an sich bekannt, in einem Betonmischer mit drehbarer Trommel mit flachem Boden ein Rührwerk durch eine hängende Welle drehend anzutreiben. Zwei achsensymmetrisch angeordnete Finger tragen jeweils ein hohes Blatt und ein über den Boden gleitendes unteres Blatt. Jeder Finger ist heb- und senkbar gelagert, so daß sich das untere Blatt anheben kann, wenn am Boden 11a ein Widerstand auftritt.

Aus der GB 1 014 700 A ist es an sich bekannt, in einem Getränkespender eine drehend angetriebene Welle durch eine Bodenplatte hindurchzuführen. Auf einen Kegelstumpf am oberen Ende der Welle ist lose ein Rührkäfig mit einer konischen Gegenbohrung aufgesetzt und durch Reibung drehend mitgenommen, solange keine Widerstände auftreten.

Aus der GB 741 824 A ist es an sich bekannt, bei einem Haushaltsmixer eine Motorwelle über eine flexible Kupplung mit einer Antriebswelle für den Rotor eines Mixgefäßes zu verbinden.

Aus der GB 594 923 A ist es an sich bekannt, in einen Behälter einen Rührstab abgedichtet und dank eines elastischen Verbindungselements seitlich bewegbar einzuführen.

Aus der GB 511 779 A ist es an sich bekannt, bei einem Haushaltsmixer an einem Motorgehäuse ein rotationssymmetrisches, starres Gehäuse zu befestigen, in das sich eine Motorwelle erstreckt. Durch eine untere Öffnung des Gehäuses ist mit seitlichem Spiel, sowie koaxial und im Abstand zu der Motorwelle eine Welle einer Rührscheibe in das Gehäuse eingeführt. Die Wellenenden sind durch eine Gummihülse nach Art einer flexiblen, dämpfenden Kupplung miteinander drehfest verbunden. Das obere Ende der Welle ist drehbar in einem Lagerkörper gelagert, der mit einer unteren Kugelfläche in eine Lagerschale in dem Gehäuse gedrückt wird.

Aus der GB 234 013 ist es an sich bekannt, bei einer handbetätigten Wasch- oder Mischmaschine eine Welle einer Rührplatte in einer Buchse einer Traverse drehbar und axial verschiebbar zu lagern.

Aus der US 3 744 766 A ist es an sich bekannt, in ein Reagenzglas ein Mischpaddel mit einer Welle von oben einzuführen. Am oberen Ende der Welle ist ein Rotor einer Druckluftturbine befestigt. Der Rotor ist kegelstumpfförmig ausgebildet und in eine komplementär keglige Aufnahmebohrung eines Stators eingehängt. So ist der Rotor in Grenzen seitlich auslenkbar.

Aus der DE 40 03 362 C2 ist es an sich bekannt, kontaminierte Böden in situ durch ein verfahrbares Aufbereitungsgerät zu behandeln. An einem Träger (Lafette) des Geräts hängt ein Schneid- und Rührgerät mit schraubenartigen Schneid- und Mischflügeln zwischen denen Mischpaddel an einem gemeinsamen Hohlgestänge befestigt sind. Durch eine Zulaufleitung werden Austrittsöffnungen mit einer Suspension mit Mikroorganismen und/oder Nährstoffen und/oder anderen Medien gespeist. Im Betrieb kann das Schneid- und Rührgerät keine seitlichen Ausweichbewegungen ausführen. Vielmehr ist es durch sein Bohrloch zentriert.

Aus der DE 35 18 849 A1 ist es an sich bekannt, fließfähige Suspensionen in einem stehenden Behälter durch einen Schraubenrührer mit Tauchmotor aufzuwühlen und zu durchmischen. Der Tauchmotor ist mit einem Schlitten entlang Schienen in dem Behälter axial verfahrbar und relativ zu dem Schlitten schwenkbar.

Der Erfindung liegt die Aufgabe zugrunde, eine Mischvorrichtung zu schaffen, die universell in Reaktoren einsetzbar ist, und die Ausweichbewegungen des Mischers besser zu kontrollieren.

Diese Aufgabe ist durch die Merkmale des Anspruchs 1 gelöst. Die Vorrichtung kann z.B. mit einer verfahrbaren Lafette oder der Gabel eines Gabelstaplers gekuppelt werden. Die Vorrichtung ist dann an jede beliebige Stelle eines Reaktors manövrierbar, in dem kontaminierte Feststoffe gereinigt werden sollen. Die Vorrichtung kann durch ihr Trägergerät an unterschiedlichen Stellen innerhalb des Reaktors nacheinander eingesetzt werden und dort für eine Lockerung der Feststoffe sorgen. Dabei kann die Vorrichtung auch schwenkend geführt werden, so daß sich auch dadurch der Aktionsradius des Mischwerkzeugs vergrößert. Die Ausweichbewegung des Mischwerkzeugs verhindert dessen Beschädigung, wenn sich in den Feststoffen besondere Widerstände, z.B. Steine, befinden. Auf diese Weise können Stöße auf die Mischwerkzeuge elastisch abgefangen und neutralisiert werden. Es ergibt sich eine zwängungsfreie Aufnahme der Mischwerkzeuge in der Haltevorrichtung. Diese Aufnahme gestattet auch die vorerwähnten Ausweichbewegungen der Mischwerkzeuge bei auftretenden Hindernissen in den Feststoffen.

Die Antriebe können z.B. als Hydromotoren ausgebildet sein. Die Hydraulikenergie kann über einen externen Anschluß eines Gabelstaplers bereitgestellt und auch bei mehreren Antrieben je Vorrichtung über ein Verteilerstück auf die einzelnen Antriebe verteilt werden. Der Stabilisator greift mit günstig langem Hebelarm an der Antriebswelle und nicht am Gehäuse des Antriebes an. So läßt sich der Antrieb leichter austauschen, während der Stabilisator seine Funktionen der Stabilisierung in seiner Ebene und der Nachgiebigkeit für die Ausweichbewegungen quer zu der Ebene optimal erüllen kann.

Gemäß Anspruch 2 ergibt sich eine besonders betriebssichere Lagerung der Antriebswelle, die auch die erforderlichen Ausweichbewegungen der Mischer zuläßt.

Mit den Merkmalen des Anspruchs 3 werden in der Ebene des Stabilisators Ausweichbewegungen weitgehend unterbunden, in allen anderen Ebenen aber mehr oder weniger zugelassen. Diese Maßnahme dient vor allem dem Zweck, gegenseitige Beeinträchtigung von mehreren Mischwerkzeugen einer Vorrichtung zu verhindern. Es lassen sich auch Kollisionen der Mischwerkzeuge mit der Reaktorwand ausschließen.

Gemäß Anspruch 4 ist das Auswechseln der Mischwerkzeuge zu Wartung, Reparatur und eventuell Anpassung an den jeweiligen Einsatzfall erleichtert.

Die Welle gemäß Anspruch 5 kann zur Erhöhung ihrer Steifigkeit und zur Gewichtseinsparung insbesondere rohrförmig ausgebildet sein. Als Mischelement kommt z.B. eine offene Wendel oder eine Anzahl von Paddeln in Betracht. Alle Mischelemente sollen auf die zu behandelnden Feststoffe einen Transporteffekt nach oben hin ausüben. Die Mischelemente sollen gleichzeitig das Mischwerkzeug in die zu behandelnden Feststoffe hineinziehen. Bei Bedarf kann die Drehrichtung der Mischwerkzeuge zum Entfernen der Mischwerkzeuge aus den Feststoffen umgekehrt werden.

Gemäß Anspruch 6 sind die Messerklingen vorzugsweise radial angeordnet.

Die Merkmale des Anspruchs 7 verhindern gegenseitige Beschädigung der Mischwerkzeuge. Nach einer besonderen Ausführungsform sind an der Vorrichtung zwei Mischwerkzeuge nebeneinander angeordnet.

Es ist aber auch eine Ausbildung gemäß Anspruch 8 mit drei Mischwerkzeugen in der Vorrichtung realisierbar. Bei Bedarf können sogar vier und noch mehr Mischwerkzeuge je Vorrichtung eingesetzt werden.

Gemäß Anspruch 9 ergibt sich eine besonders sichere und stabile Ankupplung der Vorrichtung an den Gabelstapler.

Die Merkmale des Anspruchs 10 führen zu kostengünstiger und wirksamer Begrenzung der Ausweichbewegungen.

Weitere Merkmale und Vorteile der Erfindung ergeben sich aus der nachfolgenden Beschreibung von Ausführungsbeispielen anhand der Zeichnungen. Es zeigt:
Fig. 1 einen teilweisen Längsschnitt durch eine Vorrichtung mit zwei nebeneinander angeordneten Mischwerkzeugen,
Fig. 2 die Schnittansicht nach Linie II-II in Fig. 1,
Fig. 3 eine schematische Ansicht von unten auf eine Vorrichtung mit drei Mischwerkzeugen und
Fig. 4 eine schematische Ansicht von unten auf eine Vorrichtung mit vier Mischwerkzeugen.

Fig. 1 zeigt eine Vorrichtung 1 zur Durchmischung von Feststoffen, die mit Schadstoffen kontaminiert sind und sich in einem Reaktor befinden. Der Reaktor ist entweder oben offen oder weist eine oder mehrere Öffnungen auf, durch die hindurch die Vorrichtung 1 zur Durchmischung der in dem Reaktor befindlichen Feststoffe eingeführt werden kann.

Die Vorrichtung 1 weist zwei nebeneinander angeordnete Mischwerkzeuge 2 und 3 mit Längsachsen 4 und 5 auf, die in Richtung von Pfeilen 6 und 7 gegensinnig drehend antreibbar sind. Jedes Mischwerkzeug 2, 3 weist eine zentrale, hier rohrförmig ausgebildete Welle 8 und 9 auf. An jeder Welle 8, 9 ist wenigstens ein an sich bekanntes Mischelement 10 und 11 befestigt, deren sich bei Rotation um die Längsachsen 4, 5 ergebende Umhüllende in Fig. 1 strichpunktiert angedeutet sind. Die Mischelemente 10, 11 können z.B. als nach außen offene, schraubenförmige Wendeln ausgebildet sein. An jeder Welle, 8, 9, können aber auch mehrere über den Umfang und entlang der Längsachse 4, 5 verteilte Paddel als Mischelemente 10, 11 befestigt sein.

In jedem Fall sind die Mischelemente 10, 11 so angeordnet und ausgebildet, daß sich bei der normalen Drehbewegung im Sinne der Pfeile 6, 7 ein Transporteffekt auf die Festsstoffe in Fig. 1 nach oben hin ergibt. Dadurch wird die Durchmischung der Peststoffe begünstigt. Außerdem werden die Mischwerkzeuge 2, 3 auf diese Weise gewissermaßen selbsttätig in die Feststoffe hineingezogen, so daß sich der Kraftaufwand für das Einbringen der Mischwerkzeuge 2, 3 in die Feststoffe deutlich verringert. Zum Herausziehen der Mischwerkzeuge 2, 3 aus den Feststoffen können die Mischwerkzeuge 2, 3 entgegen der Drehrichtung der Pfeile 6, 7 angetrieben werden. Dadurch kann des Herausziehen der Mischwerkzeuge 2, 3 erleichtert werden.

Jede Welle 8, 9 ist über eine Kupplung 12 und 13 drehfest mit einer Antriebswelle 14 und 15 verbunden, die durch einen als Hydromotor ausgebildeten Antrieb 16 und 17 drehend antreibbar ist. Ein Gehäuse 18 und 19 jedes Antriebs 16, 17 ist durch ein als Kardangelenk ausgebildetes Universalgelenk 20 an einer steifen Platte 21 einer Haltevorrichtung 22 angelenkt. Jeder Antrieb 16;17, seine Antriebswelle 14;15, die zugehörige Kupplung 12;13 und das angeschlossene Mischwerkzeug 2;3 bilden einen Mischer.

Jede Antriebswelle 14, 15 ist in Fig. 1 unterhalb des zugehörigen Gehäuses 18, 19 über ein Pendelrollenlager 23 und 24 an dem Scheitel eines im wesentlichen V-förmigen Stabilisators 25 und 26 abgestützt. Die beiden oberen Enden jedes Stabilisators 25, 26 sind mit der Platte 21 verschraubt. Die Wirkung jedes Stabilisators 25, 26 ist, daß sich die Mischwerkzeuge 2, 3 in der Ebene der Stabilisatoren 25, 26 praktisch nicht aufeinander zu und voneinander weg bewegen können. Ein Bewegungsfreiheitsgrad besteht dagegen in Grenzen quer zu dieser Ebene, damit die Mischwerkzeuge 2, 3 Widerständen elastisch ausweichen können, die sich hier und da in den zu behandelnden Feststoffen befinden können. Solche Widerstände können z.B. Steine in zu reinigenden Böden sein. Einige solcher Widerstände können durch Messerklingen 27 und 28 zerkleinert werden, die am unteren, freien Ende der Wellen 8, 9 befestigt sind. Es können je Welle 8, 9 auch mehrere über den Umfang verteilte Messerklingen 27, 28 verwendet werden.

Wie besonders deutlich Fig. 2 zeigt, ist die steife Platte 21 seitlich auf zwei Traversen 29 und 30 eines Rahmens 31 der Haltevorrichtung 22 aufgelegt und mit den Traversen 29, 30 durch Schrauben 32 verbunden. Jede Traverse 29, 30 weist im wesentlichen rechteckigen, hochkant angeordneten Querschnitt auf und wird außen und unten von L-Profilen 33 übergriffen. Jedes L-Profil 33 ist einerseits mit der zugehörigen Traverse 29, 30 und andererseits mit der Platte 21 verschraubt.

Die rohrförmigen Traversen 29, 30 sind jeweils an ihren Enden mit sich nach oben erstreckenden Stirnplatten 34, 35 des Rahmens 31 verschweißt. An die Stirnplatten 34, 35 ist oben eine weitere, zentrale Traverse 36 angeschweißt, die ebenfalls rohrförmig mit annähernd rechteckigem, hochkant stehendem Querschnitt ausgebildet ist. An die Unterseite der zentralen Traverse 36 sind sich rechtwinklig dazu erstreckende, rohrförmige Aufnahmeschuhe 37 und 38 für die Gabel eines Gabelstaplers in seitlichem Abstand voneinander angeschweißt. Diese Konstruktion ist ferner an jedem Aufnahmeschuh 37, 38 durch angeschweißte Stegbleche 39 versteift.

Insgesamt ergibt sich ein sehr steifer Rahmen 31, der durch einen Gabelstapler aufgenommen und, je nach den Freiheitsgraden des Hubgerüsts des Gabelstaplers, manövriert und zum Transport und im Mischbetrieb bewegt werden kann. Es ist hier auch eine pendelnde Betätigung der Vorrichtung 1 bei entsprechender Pendelbewegung der Gabel des Gabelstaplers ausführbar.

Fig. 2 zeigt weitere Einzelheiten der Vorrichtung 1 in ihrer relativen Anordnung zueinander.

In Fig. 2 ist auch strichpunktiert die rechte Endstellung des Antriebs 16 nach einer entsprechenden Ausweichbewegung eingetragen. In dieser Endstellung bildet die Traverse 30 einen Anschlag für das Gehäuse 18 des Antriebs 16. Gleiches gilt für die Traverse 29, wenn das Mischwerkzeug 2 eine Ausweichbewegung in der Gegenrichtung ausführt.

Bei der Vorrichtung 1 gemäß Fig. 3 finden drei Mischwerkzeuge 40 Verwendung, deren Längsachsen 41 an den Ecken eines gleichseitigen Dreiecks 42 angeordnet sind. Zweckmäßigerweise sind hier die Stabilisatoren 43 entlang Winkelhalbierender des Dreiecks 42 angeordnet. So bleibt den Mischwerkzeugen 40 im Bedarfsfall genügend Spielraum für Ausweichbewegungen.

Bei der Vorrichtung 1 gemäß Fig. 4 sind gleiche Teile wie in Fig. 3 mit gleichen Bezugszahlen versehen. Fig. 4 zeigt eine Vorrichtung 1 mit vier Mischwerkzeugen 40, deren Längsachsen 41 jeweils an den Ecken eines Rechtecks 44 angeordnet sind. Die Stabilisatoren 43, 43 jeweils zweier benachbarter Mischwerkzeuge 40 liegen in einer gemeinsamen Ebene, in der folglich Ausweichbewegungen der Mischwerkzeuge weitgehend unterdrückt sind. Quer zu diesen beiden Ebenen der Stabilisatorenpaare 43, 43 sind die Mischwerkzeuge 40 in verhältnismäßig großem Abstand voneinander angeordnet, um in dieser Richtung Ausweichbewegungen der Mischwerkzeuge 40 zuzulassen.

## Patentansprüche

1. Vorrichtung (1) zur Durchmischung von mit Schadstoffen, z.B. Kohlenwasserstoffen, kontaminierten Feststoffen, z.B. Böden, Schlämmen und Metallspänen, in einem Reaktor,
wobei die Vorrichtung (1) wenigstens einen Mischer aufweist,
wobei jeder Mischer einen Antrieb (16;17), eine Antriebswelle (14;15) und ein durch die Antriebswelle (14;15) drehend antreibbares Mischwerkzeug (2,3;40) aufweist,
wobei jeder Mischer über ein Universalgelenk (20) durch eine Haltevorrichtung (22) derart gehalten ist, daß das Mischwerkzeug (2,3;40) vor Unhomogenitäten in den Feststoffen in Grenzen eine Ausweichbewegung ausführen kann,
und wobei die Haltevorrichtung (22) einen im wesentlichen starren Rahmen (31) aufweist,
dadurch gekennzeichnet, daß die Vorrichtung (1) transportabel ist,
daß jedes Universalgelenk (20) einerseits an dem Rahmen (31) und andererseits an einem Gehäuse (18;19) des zugehörigen Antriebs (16;17) angelenkt ist,
und daß jede Antriebswelle (14;15) in axialem Abstand von dem zugehörigen Universalgelenk (20) durch einen an dem Rahmen (31) befestigten Stabilisator (25;26; 43) geführt ist.

2. Vorrichtung nach Anspruch 1, dadurch gekennzeichnet, daß zwischen dem Stabilisator (25;26;43) und der Antriebswelle (14;15) ein Pendelrollenlager (23;24) angeordnet ist.

3. Vorrichtung nach Anspruch 1 oder 2, dadurch gekennzeichnet, daß jeder Stabilisator (25;26;43) in einer durch die Längsachse (4;5;41) der zugehörigen Antriebswelle (14;15) verlaufenden Ebene angeordnet ist, und daß die Ausweichbewegung der Antriebswelle (14;15) im wesentlichen quer zu der Ebene erfolgt.

4. Vorrichtung nach einem der Ansprüche 1 bis 3, dadurch gekennzeichnet, daß jedes Mischwerkzeug (2;3;40) über eine Kupplung (12;13) mit seiner Antriebswelle (14; 15) lösbar verbunden ist.

5. Vorrichtung nach einem der Ansprüche 1 bis 4, dadurch gekennzeichnet, daß jedes Mischwerkzeug (2;3;40) eine zentrale, mit der zugehörigen Antriebswelle (14;15) drehfest verbundene Welle (8;9) und wenigstens ein an der Welle (8;9) befestigtes Mischelement (10; 11) aufweist.

6. Vorrichtung nach Anspruch 5, dadurch gekennzeichnet, daß am freien Ende jeder Welle (8;9) wenigstens eine Messerklinge (27;28) befestigt ist.

7. Vorrichtung nach einem der Ansprüche 1 bis 6, dadurch gekennzeichnet, daß bei Einsatz mehrerer Mischwerkzeuge (2,3;40) in der Vorrichtung (1) die Mischwerkzeuge (2,3;40) sich in keinem Betriebszusand gegenseitig durchdringen.

8. Vorrichtung nach einem der Ansprüche 1 bis 7, dadurch gekennzeichnet, daß bei Einsatz von drei Mischwerkzeugen (40) in der Vorrichtung (1) die Längsachsen (41) der Mischwerkzeuge (40) an den Ecken eines gleichseitigen Dreiecks (42) angeordnet sind.

9. Vorrichtung nach einem der Ansprüche 1 bis 8, dadurch gekennzeichnet, daß die Haltevorrichtung (22) mit Aufnahmeschuhen (37,38) für die Gabel eines Gabelstaplers versehen ist.

10. Vorrichtung nach einem der Ansprüche 1 bis 9, dadurch gekennzeichnet, daß Traversen (29,30) des Rahmens (31) Anschläge für das Gehäuse (18;19) jedes Antriebs (16;17) bilden, um die Ausweichbewegungen der Mischwerkzeuge (2;3;40) zu begrenzen.

## Claims

1. Apparatus (1) for the thorough mixing in a reactor of materials, e.g. soil, slurries and metal shavings, contaminated by contaminants, e.g. hydrocarbons,
wherein the apparatus (1) comprises at least one mixer,
wherein each mixer comprises a drive (16; 17), a drive shaft (14; 15) and a mixing tool (2,3; 40) rotatably drivable by the drive shaft (14; 15),
wherein each mixer is supported by a mounting device (22) via a universal joint (20) in such a manner that the mixing tool (2, 3; 40) can, within limits, execute a yielding movement upon encountering inhomogeneities in the material,
and wherein the mounting device (22) comprises a substantially rigid frame (31),
characterised in that the apparatus (1) is portable,
that each universal joint (20) is coupled on the one hand to the frame (31) and on the other hand to a housing (18; 19) of the associated drive (16; 17),
and that each drive shaft (14; 15) is guided at an axial spacing from the associated universal joint (20) by a stabiliser (25; 26; 43) fixed to the frame (31).

2. Apparatus according to claim 1, characterised in that a self-aligning roller bearing (23; 24) is arranged between the stabiliser (25; 26; 43) and the drive shaft (14; 15).

3. Apparatus according to claim 1 or 2, characterised in that each stabiliser (25; 26; 43) is arranged in a plane extending through the longitudinal axis (4; 5; 41) of the associated drive shaft (14; 15), and that the yielding movement of the drive shaft (14; 15) is effected substantially perpendicular to the plane.

4. Apparatus according to one of claims 1 to 3, characterised in that each mixing tool (2; 3; 40) is releasably connected to its drive shaft (14; 15) by means of a coupling (12; 13).

5. Apparatus according to one of claims 1 to 4, characterised in that each mixing tool (2; 3; 40) comprises a central shaft (8; 9) connected for rotation with the associated drive shaft (14; 15) and at least one mixing element (10; 11) fixed to the shaft (8; 9).

6. Apparatus according to claim 5, characterised in that at least one cutter blade (27; 28) is fixed at the free end of each shaft (8; 9).

7. Apparatus according to one of claims 1 to 6, characterised in that, with a plurality of mixing tools (2; 3; 40) in the apparatus (1), the mixing tools (2; 3; 40) do not interleave with one another in any operational state.

8. Apparatus according to one of claims 1 to 7, characterised in that, with the use of three mixing tools (40) in the apparatus (1), the longitudinal axes (41) of the mixing tools (40) are arranged at the corners of an equilateral triangle (42).

9. Apparatus according to one of claims 1 to 8, characterised in that the mounting device (22) is provided with hollow runners (37, 38) for the forks of a forklift vehicle.

10. Apparatus according to one of claims 1 to 9, characterised in that beams (29, 30) of the frame (31) form stops for the housing (18; 19) of each drive (16; 17), in order to limit the yielding movements of the mixing tools (2; 3; 40).

## Revendications

1. Dispositif (1) pour le mélange intime dans un réacteur de matières solides, par exemple des sols, des boues et des copeaux métalliques, contaminées par des substances polluantes par exemple des hydrocarbures,
ledit dispositif (1) comportant au moins un mélangeur,
chaque mélangeur comportant un entraînement (16;17), un arbre d'entraînement (14;15) et un outil mélangeur (2,3;40) pouvant être entraîné de manière rotative par ledit arbre d'entraînement (14;15),
chaque mélangeur étant supporté par un dispositif support (22), au moyen d'un joint universel (20), de manière telle que l'outil mélangeur (2,3;40) peut effectuer entre certaines limites, un mouvement d'évitement en présence de parties non homogènes dans lesdites matières solides,
et ledit dispositif support (22) présentant un cadre (31) sensiblement rigide,
caractérisé en ce que le dispositif (1) est transportable,
en ce que chaque joint universel (20) est articulé d'une part sur le cadre (31) et d'autre part sur un carter (18;19) de l'entraînement associé (16;17), et
en ce que chaque arbre d'entraînement (14;15) est guidé à une distance axiale du joint universel (20) correspondant par un stabilisateur (25;26;43) fixé sur le cadre (31).

2. Dispositif selon la revendication 1, caractérisé en ce que, entre le stabilisateur (25;26;43) et l'arbre d'entraînement (14;15), est disposé un roulement à rouleaux articulé (23;24).

3. Dispositif selon la revendication 1 ou 2, caractérisé en ce que chaque stabilisateur (25;26;43) est disposé dans un plan s'étendant à travers l'axe longitudinal (4;5;41) de l'arbre d'entraînement correspondant (14;15), et en ce que le mouvement d'évitement de l'arbre d'entraînement (14;15) s'effectue sensiblement dans le sens transversal à ce plan.

4. Dispositif selon l'une des revendications 1 à 3, caractérisé en ce que chaque outil mélangeur (2;3;40) est assemblé de manière amovible à son arbre d'entraînement (14;15), à travers un accouplement (12;13).

5. Dispositif selon l'une des revendications 1 à 4, caractérisé en ce que chaque outil mélangeur (2;3;40) présente un arbre (8;9) central, assemblé de manière solidaire à l'arbre d'entraînement (14;15), et au moins un élément mélangeur (10;11) fixé sur l'arbre (8;9).

6. Dispositif selon la revendication 5, caractérisé en ce que, sur l'extrémité libre de chaque arbre (8;9) est fixée au moins une lame de couteau (27;28).

7. Dispositif selon l'une des revendications 1 à 6, caractérisé en ce que, lors de l'utilisation de plusieurs outils mélangeurs (2,3;40) dans le dispositif (1), lesdits outils mélangeurs (2,3;40) ne s'interpénètrent pas mutuellement, quel que soit l'état opérationnel.

8. Dispositif selon l'une des revendications 1 à 7, caractérisé en ce que, en cas d'utilisation de trois outils mélangeurs (40) dans le dispositif (1), les axes longitudinaux (41) desdits outils mélangeurs (40) sont disposés aux angles d'un triangle équilatéral (42).

9. Dispositif selon l'une des revendications 1 à 8, caractérisé en ce que le dispositif support (22) est muni de sabots de prise (37,38) pour la fourche d'un empileur à fourche.

10. Dispositif selon l'une des revendications 1 à 9, caractérisé en ce que des traverses (29,30) du cadre (31) constituent des butées pour le carter (18;19) de chaque entraînement (16;17), afin de délimiter les mouvements d'évitement des outils mélangeurs (2;3;40).
